# EUROPEAN PATENT APPLICATION

(11) **EP 4 751 622 A1**
(43) Date of publication of application: **03.06.2026**
(21) Application number: 24216971.2
(22) Date of filing: 02.12.2024
(51) Int. Cl.: A47J 36/06, F24C 15/12, F24C 15/00

(54) **COVER FOR COOKWARE**

(71) Applicant: Rohm, Quynh Anh, 80803 München (DE)
(72) Inventor: Rohm, Quynh Anh, 80803 München (DE)
(74) Representative: Röthinger, Rainer

(57) **Abstract**

A cover (10) for a cookware (24) comprises a flat, surface-dimensionally stable, water-vapor-permeable but grease-impermeable material (20) which is dimensioned to fully cover a receiving cavity for food to be cooked in a cookware (22) solely with said material (20).

## Description

The present disclosure relates to a cover for a cookware, which is designed in particular to be used instead of a cookware lid. This cover is particularly advantageous for use with cookware of various sizes, in which food is cooked, for example with fat, such as oil and/or butter (lard), in particular on a hob, for example frying pans, and/or in which food is cooked, in particular in an oven, for example casserole dishes.

As is well known, commercially available lids made of glass or metal provide protection against splashes of fat and the smallest particles of cooked food and, especially fried food, which are ejected from the cookware during cooking, simmering and, in particular, frying. Without the use of such lids, the cooking area (e.g. stove, hob, oven) and the surrounding area will become more or less contaminated depending on the intensity of cooking, simmering or frying. However, since glass or metal lids also form a water vapor barrier, their use is disadvantageous in cooking processes in which water vapor is to escape to achieve an optimum cooking result, i.e. in particular in frying processes.

A cover for frying pans is known from WO 81/03118 A1, for which a filter paper is laminated onto a cardboard ring with reinforcing struts and which is used instead of commercially available lids. However, this cover sags in the direction of the food over time during the cooking process, as the cardboard ring becomes saturated with water vapor, softens and thus loses its stability. In addition, due to its stabilizing composite construction, the cover must be offered and stored in a bulky flat form. Furthermore, the lamination step is an additional cost item in production.

In order to achieve a good cooking result while minimizing contamination of the cooking area and surroundings, including a person cooking, as well as the accumulation of grease particles in the air, a new cover for a cookware is presented below as a further alternative to or even for use with commercially available lids.

This cover comprises a flat, surface-dimensionally stable, water vapor-permeable but grease-impermeable material which is designed to cover the entire surface of a receiving cavity for food to be cooked in a cookware with only this material, i.e. has a suitable material extension or surface area. Grease-impermeability here means a permeability barrier against grease splashes and against grease particles rising with water vapor. If the material were saturated with grease, grease could penetrate the material in the direction of gravity. However, this does not occur if grease is absorbed against the direction of gravity - as is the case with the cover when used with a cookware - as grease would then drip back into the receiving cavity in the direction of gravity in the event of saturation.

In the unfolded state, the material for covering a cookware preferably extends substantially in a plane, which is also referred to below as the covering plane when used on the cookware. Surface dimension stability here means a material (shape) stability even in the unfolded state of the material, which is sufficient - even in use during cooking and/ or frying, i.e., when fat and / or vapor affect the material - to cover the receiving cavity for food to be cooked in a cookware simply by contacting an edge of the cookware enclosing the receiving cavity for food to be cooked, i.e., without intermediate support points in the covering area enclosed by the cookware edge, substantially even in this area, i.e., the covering plane. Depending on the size of the area to be covered, i.e., the covering area, surface dimension stability can include, i.e., allow, a sag deviation in the direction of gravity within a predetermined tolerance, the tolerance preferably defining that the material maximally sags up to 30%, preferably maximally up to 20%, and most preferably only up to 10% of a height of the receiving cavity for food to be cook in a cookware into the receiving cavity for cooked food. The material can be provided with a plurality of and in particular with at least three fold lines, which are arranged such that the material in the folded state has at least one material section projecting from the plane, in other words at least one material section projecting from the plane. In the unfolded, i.e. flat state, these fold lines and thus also at least one folded projecting material section in the folded state preferably extend in the transverse direction over the entire extent of the material, i.e. transversely to a longitudinal extension, hereinafter also referred to as the longitudinal direction of the material surface. However, it is also conceivable that the fold lines only partially extend from one side in the transverse direction through the lateral surface, i.e. not completely between sides of the lateral surface that are opposite in the transverse direction. Depending on the arrangement of the fold lines, a wide variety of cross-sectional shapes of the protruding material section are conceivable, such as triangles or squares. In relation to the transverse extension of the material surface and the complete crossing of the same with the fold lines, these cross-sectional shapes occur on opposite sides of the material surface, whereby either a parallel course or a conical course of the fold lines is required for this. Conical here means a course of the fold lines such that they meet at a point outside the material surface. In relation to the transverse extension of the material surface and the partial crossing of the same with the fold lines, this cross-sectional shape only occurs on one of the opposite sides of the material surface. The latter is also the case when the fold lines converge at one point on one side of the material and are only spaced apart on the opposite side, i.e. when the fold lines radiate from one point in the material surface. If a point at which the fold lines converge lies outside the material surface, the same cross-sectional shapes are created on opposite sides but with different cross-sectional areas. Identical cross-sections of the protruding material section are only created on the opposite sides of the material surface if the fold lines run parallel.

Preferably, each cover comprises a group of fold lines and each group of fold lines comprises a plurality of subgroups spaced apart from one another in the longitudinal direction of the material, each subgroup comprising a plurality of and in particular at least three fold lines which are designed to be folded to form a projecting material section. Each subgroup therefore always results in a projecting material section. The subgroups can be identical or different with regard to the relative fold line arrangement. In particular, a fold line arrangement can occur several times in a row in the longitudinal direction of the material plane, but is alternately rotated by 180° in each case. The fold lines preferably run parallel to each other, but a conical course of at least the two outermost fold lines of the plurality of fold lines or, in the case of subgroups, at least one subgroup of the fold lines is also conceivable, as already described at the end of the previous paragraph with reference to the cross-sections of the projecting material section.

The fold lines can, for example, be introduced into the material by line perforation or line embossing in order to make it easier for the user to fold the cover. However, the fold lines can also just be printed on.

In the unfolded state, the cover can be handled flexibly in a longitudinal and transverse direction, i.e. it can be bent and, in particular, rolled. In the folded state, the at least one projecting material section of the cover provides stability along its fold extension. For the purposes of this description, the term transverse direction is not limited to a course perpendicular to the longitudinal direction. Rather, the transverse direction can run at any angle greater than 0° and less than 180° relative to the longitudinal direction. The transverse directions of the respective fold extensions of several projecting material sections can also differ, so that, for example, the fold lines of a first subgroup have a different transverse direction than the fold lines of a second subgroup.

Preferably, in the unfolded state, the material has a dimension in the longitudinal and transverse direction, i.e. a material plane such that, in the folded state, it is designed to extend with its lower side to come at least into contact with an edge of the cookware enclosing the receiving cavity for cooked food, with which the cover is to be used. Advantageously, the extension even extends beyond the edge. This edge of the cookware then spans the cover plane. When the cover is used on the cookware, the plane described above is preferably congruent with the cover plane, so that the terms plane and cover plane can then be used interchangeably. In general, it should be said that feature definitions relative to the plane of the cover in the unfolded state apply analogously to the cover plane, i.e. the plane spanned by the edge of a cookware opening, and can be used interchangeably.

In the folded state, the at least one projecting material portion extending in the transverse direction of the material plane projects from the covering plane in the direction of an upper side of the material opposite the lower side in such a way that the covering material is designed not to rest on the edge of the cookware in the region of the at least one projecting material section, but to be spaced apart from the cookware, forming at least one opening of the receiving cavity to the cookware environment. This means that water vapor (in addition to escaping through the water vapor-permeable material itself) can also escape through the at least one opening formed, which, in the case of a projecting material section extending completely across the entire material plane, is two openings on opposite sides of the cover in the transverse direction of the material plane. However, splashes of fat from the receiving cavity in the cookware remain on the underside of the cover facing the cover plane. A further advantage is that the at least one projecting material portion can serve as a handle for handling the cover.

The material of the cover is preferably multi-layered, e.g. at least two-layered. The multiple layers, e.g. at least two layers, can be fixed relative to each other. This fixation can take place in at least one point, but also along at least one line, whereby this line can be a continuous line. However, a non-continuous line is also conceivable, such as a dotted line, a dashed line or a dash-dot line. Conceivable fixing methods are pressing, such as embossing, or gluing. Advantageously, the material has cellulose fibers or is formed from cellulose fibers, which can then run in particular in the longitudinal direction of the material surface. Commercially available filter paper in particular can be used as a material with or made of cellulose fibers. For a material with or made of cellulose fibers, the layers can be fixed by pressing in the form of micro-corrugated embossing. This micro-embossing is then advantageously perpendicular or at least transverse to the fiber direction. Since cellulose fibers are compostable, the cover can be made with/from them as an environmentally friendly disposable article. In general, the cover is not intended as a reusable but as a disposable article that can be used several times before disposal, depending on the degree of soiling, especially during a continuous cooking phase, during which temporary storage of the soiled cover is not necessary. Even if the cover is usually only used once in the event of grease soiling due to the unavoidable unpleasant grease odors during storage, the term "disposable article" was deliberately omitted here due to the risk of too narrow an interpretation because of the multiple usability.

It should be emphasized that the cover is realized exclusively with a single material and not in combination with other components, in particular components that are foreign to the material.

In its unfolded state, the cover can have any flat shape, such as rectangular, octagonal, oval or round.

A hole or several holes can also be made in the cover material, in particular by punching, in order to increase vapor permeability. The at least one hole then preferably has a diameter that is small enough to retain grease splashes. This diameter can be between 0.2 mm and 2 mm and in particular between 0.2 mm and 1 mm. However, the cover material can also be used without any holes made after the material has been manufactured, i.e. without any holes in addition to the water vapor passage openings provided in the material as a result of the manufacturing process.

Furthermore, the cover is preferably rollable and can therefore, similar to baking paper sections, be offered in roll form, i.e. as a (sales) roll unit, and thus stored in a space-saving manner. Rollability is especially given in the unfolded state. However, rollability is also possible in the folded state with folded sections being placed at least in part on adjacent sections not provided with fold lines. Each roll unit then comprises a plurality of, in particular, identical covers either as individual sections that are already separated from each other or as a web of sections that are still connected to each other but can be separated from each other, which in the case of separated sections are rolled up in at least partial overlap or in the case of still connected sections in a row (similar to a kitchen roll) as a respective roll unit. Sections that are still connected to each other can preferably be separated from each other in a defined manner by hand without the use of aids, whereby a perforation line between the sections, as is known for a kitchen roll, is conceivable for a defined separation of two sections. In the case of a perforation line for separating two sections and the realization of the fold lines as perforation lines, the separation perforation line is preferably more heavily perforated than the fold perforation lines. For both the previous and the following description, a section therefore corresponds to a cover. As an alternative to the roll unit described above, it is also conceivable that each roll unit comprises a plurality of, in particular, identical covers as sections which are still connected to one another and which cannot be separated from one another in a defined manner without the use of auxiliary means. Such a roll unit is then preferably offered and/or stored as a set in combination with a packaging unit having a separating edge, the packaging unit being designed to accommodate the roll unit in such a way that the interconnected sections of the roll unit can be unrolled over the separating edge so that individual roll unit sections can be separated in a defined manner by means of the separating edge. The separating edge can be made of a more stable material than the roll unit and possibly also of a more stable material than the packaging unit and in particular of metal or reinforced cardboard (e.g. multi-layer cardboard in the area of the separating edge of the packaging unit).

A wide variety of cover dimensions are conceivable, depending on the dimensions of the cookware to be covered. It is also conceivable to provide the cover with several groups of fold lines, e.g. a first group with fold lines arranged at a first distance from one another or subgroups with fold lines each arranged at a first distance relative to one another and a second group with fold lines arranged at a second distance from one another or subgroups with fold lines each arranged at a second distance relative to one another, the first distance being greater than the second distance. Furthermore, it is then useful to arrange the subgroups of the first group at a third distance relative to each other, while the subgroups of the second group are arranged at a fourth distance relative to each other, the third distance then being greater than the fourth. Preferably, a distance is measured along a center line of the longitudinal extension of the material. For a large cookware item, the first fold line group is then to be folded, leaving the second fold line group unfolded, and for a small cookware item, the second fold line group is to be folded, leaving the first fold line group unfolded. The large cookware differs from the small cookware in that the opening to be covered in the large cookware is larger in area than the opening to be covered in the small cookware. The different fold line groups can be identified, for example, by different patterns, in particular in the fold-line embossing or perforation, to simplify usability for the user. At least one fold line can also belong to several groups of fold lines, e.g. both to a first group of fold lines and to a second group of fold lines. Furthermore, the material surface of the cover and in particular of each cover section in the case of a roll unit may have printed or embossed cutting lines which enable the cover or the cover section to be cut to the appropriate dimensions depending on the size of the cookware. For example, it may be useful to cut a cover to fit a small piece of cookware so that the cover does not hinder the simultaneous handling of several pieces of cookware on one cooking surface.

The cover is preferably temperature-resistant up to 250°C and can therefore also be effectively used in the oven as a splash guard for a casserole dish or other cookware or cooking utensils, such as an ovenproof pan.

Furthermore, it is also conceivable to use the cover in combination with a cookware and a lid suitable for covering the cookware. In this case, the cover is placed over the opening of the cookware in its unfolded state and then fixed in position with the lid placed over the opening and held taut over the opening. The advantage of this use is that water vapor rising from the receiving cavity for food in the cookware is let through by the cover material into an area between the top of the cover material and the underside of the lid, but condensation forming on the underside of the lid is kept in this space, as the cover material acts as a liquid barrier at least until the material is saturated with water. Overall, the heat is therefore better retained in a sealed cooking space of the cookware, defined by covering the receiving cavity of the cookware with the lid, without moisture accumulating there and returning directly to the food as condensation.

Finally, the cover can be used in the unfolded, i.e. flat, state as protection against drying out and/or protection against insects and/ or impurities to cover the cookware opening when the cookware is still containing food, is removed from the cooking zone or remains on or in the switched-off cooking zone to cool down.

Overall, the cover is characterized by the following features:
- It has a low dead weight. In particular, its weight is less than that of the cover known from WO 81/03118 A1.
- It is vapor-permeable. In particular, it is more vapor-permeable than the cover known from WO 81/03118 A1.
- Its openings defined in the folded state create a chimney effect. This supports the removal of steam from the cookware.
- In particular, its material is compostable - which is not the case with the cover known from WO 81/03118 A1, which comprises cardboard.

A preferred embodiment of the described cover is now explained in more detail with reference to the attached schematic drawings, of which:
- Fig. 1: shows a spatial representation of the cover in an unfolded state,
- Fig. 2: shows the cover from Fig. 1 in a folded state,
- Fig. 3: shows the cover of Fig. 2 in use on a cookware,
- Fig. 4A: shows a plurality of unfolded covers from Fig. 1 in a rolled-up state to form a roll unit, and
- Fig. 4B: shows a plurality of unfolded but separably connected covers in a rolled-up state to form a roll unit.

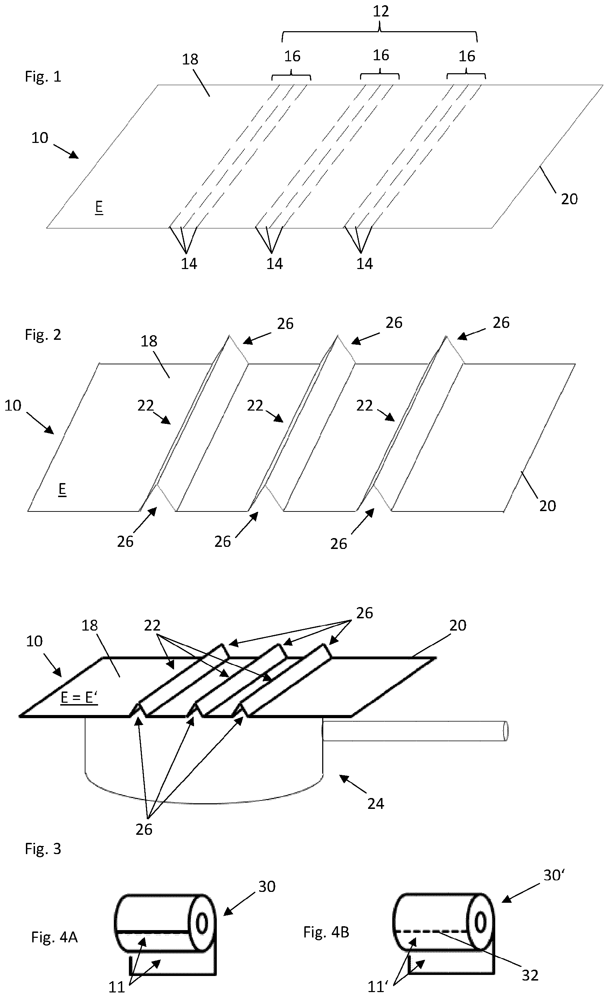

Fig. 1 shows the cover 10 in a plane E in the unfolded state. Especially in this state, the cover 10 can be flexibly rolled and bent. A group 12 of fold lines 14, comprising three identical subgroups 16 spaced apart from one another along the length of the cover 10, each with three parallel fold lines 14, is shown by means of knitting lines on a surface 18 of the material 20 of the cover 10, which may be embossed or folded perforation lines.

Fig. 2 shows the cover 10 in the folded state, each fold line subgroup 16 being folded into a triangular cross-section material section 22 projecting from the plane E of the cover 10 in the direction of its surface 18.

In Fig. 3, the cover 10 in the folded state shown in Fig. 2 is now used on a cooking utensil in the form of a frying pan 24. The cover 10 is placed on the frying pan 24 in such a way that it covers the entire plane of the cookware opening in a covering plane E' that is congruent with the plane E and its projecting material portion 22 form openings 26 on opposite sides of the cover 10 between the receiving cavity of the frying pan 24 and its surroundings, i.e. they do not rest on the edge of the frying pan 24 surrounding the cookware opening. This allows water vapor to escape from the frying pan 24 through the openings 26 formed, whereby splashes of fat from the receiving cavity of the frying pan 24 adhere to the lower side of the cover 10 facing the cover plane E'.

In Fig. 4A, a plurality of covers 10 is shown rolled up in the form of individual, separate sections 11 to form a roll unit 30. In the form rolled up as a roll unit 30, individual sections 11 overlap each other at least partially.

In Fig. 4B, on the other hand, a plurality of covers is shown as a web of sections 11' which are still connected to each other but can be separated from each other, which are joined together in a row (similar to a kitchen roll) and rolled up as a roll unit. On the basis of the perforation line 32 drawn as a dashed line between two adjacent sections 11', two sections 11' joined together can be separated from each other in a defined manner by hand only, without the use of auxiliary means.

## Claims

1. A cover (10) for a cookware (24), comprising a flat, surface-dimensionally stable, water-vapor-permeable but grease-impermeable material (20) which is dimensioned to fully cover a receiving cavity for food to be cooked in a cookware (22) solely with said material (20).

2. The cover (10) for a cookware (24) of claim 1, wherein, in an unfolded state, the material (20) for covering the cookware (24) extends substantially in a plane (E, E') and is provided with a plurality of fold lines (14) arranged in such a way that, in a folded state, the material (20) has at least one material section (22) projecting from the plane (E, E').

3. The cover (10) for a cookware (24) of claim 2, wherein the plurality of fold lines (14) comprises at least one group (12) of fold lines (14), and wherein each group (12) of fold lines (14) comprises a plurality of subgroups (16) spaced apart from one another in the longitudinal direction of the material, each subgroup (16) comprising a plurality of fold lines (14) designed to be folded into a projecting material section (22).

4. The cover (10) for a cookware (24) of claim 3,
wherein the plurality of fold lines (14) comprises at least two groups (12) of fold lines (14) and wherein the subgroups (16) of the first group (12) are arranged at a first distance relative to one another, whereas the subgroups (16) of the second group
(12) are arranged at a second distance relative to one another, and/or
wherein the fold lines (14) of each subgroup (16) have a relative arrangement to one another which is different or identical from subgroup (16) to subgroup (16), and/or
wherein the fold lines (14) of at least one subgroup (16) are arranged relative to one another in such a way that: they run parallel to one another, or at least the two outermost fold lines of a subgroup (16) run conically relative to one another.

5. The cover (10) for a cookware (24) of any one of claims 1 to 4, wherein the material (20) has a dimension in the longitudinal and transverse direction such that, in the folded state, it extends with its lower side at least into contact with an edge of the cookware (26) enclosing the receiving cavity for cooked food and preferably beyond said edge.

6. The cover (10) for a cookware (24) of claim 5, wherein the at least one material portion (22) projecting from the plane (E, E') in the folded state projects from the receiving cavity in the direction of an upper side of the material (20) opposite the lower side, and wherein the material (20) does not rest on the edge of the cookware (24) in the region of the projecting material section (22), but is spaced apart from the latter, forming at least one opening (26) of the receiving cavity to the cookware environment.

7. The cover (10) for a cookware (24) of claim 5 or 6, wherein the fold lines (14) extend in the transverse direction, preferably over the entire extent of the material (20) in its transverse direction.

8. The cover (10) for a cookware (24) of any one of claims 1 to 7, wherein the material (20) is multi-layered, in particular at least two-layered, and the several, in particular at least two layers are preferably fixed relative to each other.

9. The cover (10) for a cookware (24) of any one of claims 1 to 8, wherein the material (20) is rollable especially in the unfolded state.

10. The cover (10) for a cookware (24) of any one of claims 1 to 9, wherein the material (20) comprises cellulose fibers.

11. The cover (10) for a cookware (24) of claim 10, wherein the material (20) has a dimension in longitudinal and transverse directions and the cellulose fibers are oriented along the longitudinal direction of the material (20).

12. The cover (10) for a cookware (24) of claim 10 or 11, as far as dependent on claim 8, wherein the fixing of the several layers of material (20) is realized by corrugated embossing, in particular microwave embossing.

13. The cover (10) for a cookware (24) of any one of claims 1 to 12, wherein the flat, water-vapor-permeable but grease-impermeable material (20) forms the cover (10) by itself and without being bonded to further components, in particular components of material different from the water-vapor-permeable but grease-impermeable material.

14. A roller unit (30, 30') comprising a plurality of covers (10, 10') according to any one of claims 1 to 13, rolled to form the roller unit (30, 30').

15. The roller unit (30, 30') of claim 14, wherein the covers (10) are sections (11) which are separate from one another, said sections (11) rolled in an at least partly overlapping manner to form the roller unit (30), or wherein a row of separably connected cover sections (10, 11') is rolled to form the roller unit (30').
